# EUROPÄISCHE PATENTSCHRIFT

(11) **EP 3 182 153 B1**
(45) Veröffentlichungstag und Bekanntmachung des Hinweises auf die Patenterteilung: **27.02.2019**
(21) Anmeldenummer: 16196102.4
(22) Anmeldetag: 27.10.2016
(51) Int. Cl.: G01S 7/481, G01S 17/42, G01S 17/89

(54) **OPTOELEKTRONISCHER SENSOR UND VERFAHREN ZUR ERFASSUNG EINES OBJEKTES**
OPTOELECTRONIC SENSOR AND METHOD FOR DETECTING AN OBJECT
CAPTEUR OPTOÉLECTRONIQUE ET PROCÉDÉ DE DÉTECTION D'UN OBJET

(30) Priorität: 15.12.2015 DE 102015121840
(43) Veröffentlichungstag der Anmeldung: 21.06.2017
(73) Patentinhaber: SICK AG, 79183 Waldkirch (DE)
(72) Erfinder: Gimpel, Hartmut, 79194 Gundelfingen (DE); Tschuch, Sebastian, 79104 Freiburg (DE); Buser, Roger, 79106 Freiburg (DE)

(56) Entgegenhaltungen:
- EP-A1- 1 927 867
- JP-A- 2007 094 168
- US-A- 5 953 110
- US-B1- 8 836 922

## Beschreibung

Die Erfindung betrifft einen optoelektronischen Sensor und ein Verfahren zur Erfassung eines Objekts in einem Überwachungsbereich nach dem Oberbegriff von Anspruch 1 beziehungsweise 7.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen.

Um den Messbereich zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

Eine andere Möglichkeit zur Messbereichserweiterung besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen, wie dies beispielsweise in DE 197 57 849 B4 beschrieben ist.

Um das zurückkehrende Licht mehrerer Abtaststrahlen auszuwerten, muss der Lichtempfänger in der Lage sein, sie einzeln zu erfassen. Dazu ist eine Empfangsoptik vorgesehen, um die Abtaststrahlen jeweils auf definierte Empfangselemente zu fokussieren. Eine einfache Lösung besteht darin, die Empfangsoptik als asphärische Einzellinse auszubilden. Wenn aber mehrere Abtaststrahlen erfasst werden sollen, die zueinander jeweils in einem Winkel stehen, so ergibt sich insgesamt ein recht großes Bildfeld, und eine gemeinsame Einzellinse hat in den außeraxialen Bildbereichen große Abbildungsfehler.

Im Prinzip lässt sich das lösen, indem jedes Empfangselement seine eigene Linse erhält. Dann muss jeweils nur noch ein verschwindend kleines Bildfeld abgebildet werden, was eine Einzellinse ohne Weiteres leistet. Die Gesamtanordnung mit einer Vielzahl von Einzellinsen ist aber doch wieder sehr aufwändig.

Es ist weiterhin lange bekannt, für die Abbildung eines ausgedehnten Bildfeldes ein Objektiv aus mehreren Linsen zu nutzen. Damit lässt sich eine hohe Abbildungsqualität erzielen, aber die Herstellungs- und Justagekosten sind für einen optoelektronischen Sensor zu hoch, zumal in einem Laserscanner, wo die bewegte Masse möglichst klein bleiben soll. Gesucht ist vielmehr eine Lösung mit möglichst nur einer Linse.

Unter den bekannten Einzellinsen hat die sogenannte "Wollaston landscape lens" noch die besten Abbildungseigenschaften für ein ausgedehntes Bildfeld. Dabei handelt es sich um eine konvex-konkave Linse, also eine nach innen gekrümmte Meniskus-Form, mit einer beabstandet angeordneten Blende. Eine derartige Linse bildet tendenziell einen guten Kompromiss zwischen der günstigen Herstellung einer Einzel-Asphäre und der hohen Abbildungsqualität eines Objektivs. In der Fotographie werden mit Blendenzahlen (Quotient aus Brennweite und Durchmesser der Eintrittspupille) von k=10...16 in einem Bildfeld von ±12°-±25° die Bildpunkte mit ausreichend kleinem Abbildungsfehler abgebildet. Solche großen Blendenzahlen, d.h. kleine Öffnungen, können gerade bei Laufzeitmessungen nicht verwendet werden, weil zu viel Licht verloren geht. Bei Vergrößerung der Blende erhöhen sich auch wieder die Abbildungsfehler.

Die US 8 836 922 B1 offenbart eine rotierende LIDAR-Plattform mit einem gemeinsamen Sende- und Empfangspfad. Dabei sind jeweils mehrere nebeneinander angeordnete Sende- und Empfangselemente vorgesehen, deren Strahlengang über eine reflektierende Fläche gefaltet und auf eine gemeinsame Linse geführt ist. Die Empfangselemente liegen auf einer gekrümmten Fläche einer flexiblen Leiterplatte oder einer gekrümmten Kante.

Die EP 1 927 867 A1 befasst sich mit einem optoelektronischen Mehrebenentaster. Die einzelnen Ebenen werden von jeweils einer abstandsmessenden Bildzeile erfasst. In einigen Ausführungsformen sind die Bildzeilen zueinander versetzt, damit sich die Ebenen an eine gekrümmte Kontur beispielsweise eines Fahrzeugs für dessen Absicherung ("elektrooptischer Bumper") anschmiegen.

Die US 5 953 110 beschreibt ein mehrkanaliges Laserradar, wobei die einzelnen Kanäle über Lichtwellenleiter angebunden sind.

Die JP 2007-94168 A ordnet ein sogenanntes Bildebene-Umwandlungselement zwischen einer Empfangslinse und einem Bildsensor an. Dabei handelt es sich um ein Array auf Lichtwellenleiter unterschiedlicher Länge, die auf einer der Linse zugewandten Seite eine der Aberration der Linse entsprechend gekrümmte und auf der dem Bildsensor zugewandten Seite eine flache Ebene bilden.

Es ist daher Aufgabe der Erfindung, für einen gattungsgemäßen Sensor eine einfache Empfangsoptik mit guter Abbildungsqualität anzugeben.

Diese Aufgabe wird durch einen optoelektronischen Sensor und ein Verfahren zur Erfassung eines Objekts in einem Überwachungsbereich nach Anspruch 1 beziehungsweise 7 gelöst. Der erfindungsgemäße Sensor ist ein Mehrfachtaster, der mit mindestens einem Lichtsender mehrere Sendelichtstrahlen aussendet. Es sind also mehrere Lichtsender vorhanden, oder das Licht eines Lichtsenders wird in mehrere Sendelichtstrahlen aufgespalten, oder es ist eine Mischung aus beidem vorgesehen. Die Sendelichtstrahlen sind nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen. Ein zugehöriger Lichtempfänger weist mehrere Lichtempfangselemente auf und ist deshalb in der Lage, aus mehreren aus unterschiedlicher Richtung remittierten Lichtstrahlen mehrere Empfangssignale zu erzeugen, also beispielsweise indem je eine Photodiode je Sendelichtstrahl vorhanden ist, oder auf einem ortsaufgelösten Lichtempfänger einzelne Lichtempfangselemente oder auch Pixel eines Bildsensors entsprechend gruppiert werden. Diese Empfangssignale werden ausgewertet, um Informationen über das Objekt zu gewinnen.

Die Erfindung geht nun von dem Grundgedanken aus, dem Lichtempfänger eine gemeinsame Empfangsoptik für mehrere oder sogar alle remittierten Lichtstrahlen vorzuordnen und für die Auslegung dieser Empfangsoptik einen zusätzlichen Freiheitsgrad zu gewinnen, nämlich eine gekrümmte Form der Bildebene. Dazu wird für zumindest einige der Lichtempfangselemente ein gegenseitiger Versatz in einer Richtung senkrecht zur Empfangsfläche eingeführt. Diese im Folgenden auch manchmal als Höhenrichtung bezeichnete Richtung ist vorzugsweise zugleich diejenige hin zu der Empfangsoptik und in die deren optische Achse fällt. Allerdings kann der Empfangspfad noch beispielsweise durch Spiegel gefaltet sein.

Der Versatz kann physisch und/oder optisch sein. Ein physischer Versatz bedeutet, dass zumindest einige der Lichtempfangselemente aus einer herkömmlich üblichen gemeinsamen Ebene herausgeschoben werden. Da es letztlich für die Güte der Empfangsoptik auf die Lichtwege und nicht die physischen Abstände ankommt, ließe sich in nicht beanspruchten Beispielen der Versatz auch durch ein optisches Element zwischen Empfangsoptik und Lichtempfänger erreichen, das unterschiedliche virtuelle Abstände durch verlängerte oder verkürzte Lichtwege für zumindest einige Lichtempfangselemente einführt.

Ein gegenseitiger Versatz der Lichtempfangselemente führt zu blinden Stellen zwischen den Lichtempfangselementen. Es können nur einzelne, voneinander getrennte Bildbereiche aufgenommen werden, was den Einsatz eines derartig ausgebildeten Lichtempfängers als üblicher Bildsensor ausschließt. Für die Erfassung mehrerer voneinander separierter Messpunkte, die durch die mehreren Sendelichtstrahlen angetastet werden, ist die erfindungsgemäße Erfassung jedoch genau passend, da sich ohnehin zwischen je zwei Messpunkten unbeobachtete Bereiche befinden, bei denen es keine Rolle spielt, ob der Lichtempfänger sie prinzipiell erfassen könnte.

Die Erfindung hat den Vorteil, dass ein zusätzlicher Designfreiheitsgrad zur Optimierung der Abbildungsqualität gewonnen wird, mit dem die Abbildungsfehler einer Empfangsoptik weiter verringert werden können, und zwar in einem Maße, das gerade mit einer einfachen Empfangsoptik ohne diesen Designfreiheitsgrad nicht erreichbar wäre. Deshalb kommt der Sensor mit einer einfacheren Empfangsoptik aus, und das verringert die Herstellkosten für Bauteile und Justierung erheblich, insbesondere im Vergleich mit einem mehrlinsigen Objektiv.

Die Lichtempfangselemente bilden vorzugsweise mit ihrem gegenseitigen Versatz einen Bogen. Nochmals bevorzugt besteht der Lichtempfänger aus diesem Bogen, die Lichtempfangselemente bilden also eine Linienanordnung, die in Höhenrichtung zu dem Bogen aufgezogen ist. Selbstverständlich ist der Bogen wegen der endlichen Ausdehnung der Lichtempfangselemente diskret. Ein Bogen entspricht der konvexen oder konkaven Gestalt einer Linsenfläche und stellt daher einen ähnlichen Designfreiheitsgrad zur Verfügung.

Die Empfangsoptik weist bevorzugt eine Linse auf. Dies bedeutet zunächst, dass die Empfangsoptik auf Refraktion beruht. Vorzugsweise soll tatsächlich genau eine Linse für eine besonders kostengünstige und einfach zu montierende Empfangsoptik vorgesehen sein. Alternativen mit Spiegeln, also einer auf Reflexion basierenden Empfangsoptik, oder einem diffraktiven optischen Element sind auch denkbar.

Der Linse ist vorzugsweise eine Blende und/oder mindestens eine weitere Linse zugeordnet. Die Blende wird nochmals bevorzugt in einigem Abstand vor oder hinter der Linse platziert (landscape lens / rear landscape lens). So lassen sich mit einer immer noch einfachen Empfangsoptik bessere Abbildungseigenschaften für größere Sichtwinkel erzielen. Mehrere Linsen führen zu einem Empfangsobjektiv. Auch eine individuell angepasste Freiformlinse ist denkbar, welche die Effekte mehrerer dieser Elemente in sich vereint. Aufwändige Maßnahmen wie ein Objektiv oder eine Freiformlinse soll erfindungsgemäß wegen des erforderlichen Aufwands eigentlich vermieden werden. Sie sind aber nichtsdestotrotz mit dem Erfindungsgedanken einer gekrümmten Bildebene kombinierbar, und es ist möglich, vergleichsweise einfache Objektive oder Freiformlinsen zu verwenden, deren Abbildungseigenschaften erst durch eine Optimierung des Versatzes der Lichtempfangselemente eine geforderte Qualität erreichen.

Mehrere Lichtempfangselemente sind vorzugsweise auf einer gemeinsamen Leiterplatte angeordnet. Noch bevorzugter befinden sich alle Lichtempfangselemente auf der gemeinsamen Leiterplatte, oder gruppenweise auf mehreren gemeinsamen Leiterplatten. Die Anordnung auf einer gemeinsamen Leiterplatte ist wesentlich kostengünstiger in der Herstellung und elektronisch vorteilhaft im Hinblick auf Versorgung, Anschluss und Ansteuerung der Lichtsender. Die Lichtempfangselemente müssen nicht direkt, sondern können auch nur mittelbar auf der gemeinsamen Leiterplatte angeordnet sein, beispielsweise mit einem Zwischenelement, das für den gegenseitigen Versatz sorgt.

Die Leiterplatte weist bevorzugt Bereiche unterschiedlicher Höhen auf, wobei die Lichtempfangselemente in den Bereichen angeordnet sind. In dieser Ausführungsform ist die Leiterplatte selbst höhenstrukturiert, wobei dies zu Leiterplattenbereichen unterschiedlicher Dicke führen kann. Die unterschiedlichen Höhenlagen auf der Leiterplatte entsprechen vorzugsweise dem Versatz der Lichtempfangselemente.

Vorzugsweise ist auf der Leiterplatte ein Trägerelement mit Bereichen unterschiedlicher Höhe angeordnet, wobei die Lichtempfangselemente in den Bereichen angeordnet sind. Auch das führt zu einer Höhenstruktur, wobei es herstellungstechnisch einfacher sein kann, das Trägerelement auf der Leiterplatte zu bestücken als diese selbst zu strukturieren. Denkbar ist auch, dass Höhenstrukturen der Leiterplatte und des Trägerelements einander ergänzen. Eine weitere Variante sieht mehrere Trägerelemente für Gruppen von Lichtempfangselemente oder einzelne Lichtempfangselemente vor.

Den Lichtempfangselementen ist in einem nicht beanspruchten Beispiel ein transparentes optisches Element mit Bereichen unterschiedlich langer Lichtwege vorgeordnet. Dabei kann es sich erneut um ein höhenstrukturiertes Element handeln, das jedoch in dieser Ausführungsform nicht als Träger dient, sondern vorgeordnet wird und selektiv für zumindest einige Lichtempfangselemente die Länge der Lichtwege verändert. Die Lichtempfangselemente selbst können dabei in einer Ebene liegen, die Bildebene ist dennoch wegen der unterschiedlichen Lichtwege gekrümmt.

Den Lichtempfangselementen sind in einem nicht beanspruchten Beispiel Blendenelemente in unterschiedlichem Abstand vorgeordnet. Dies ist ein weiterer Weg, den Versatz der Lichtempfangselemente nicht physisch, sondern optisch zu erreichen. Die Blendenelemente bilden in ihrer Gesamtheit die gekrümmte Bildebene. Um im Bereich zwischen Blendenelementen und Lichtempfangselementen Lichtverluste oder ein optisches Übersprechen zu verhindern, können Lichtleiter zwischen den jeweiligen Blendenelementen und dem zugehörigen Lichtempfangselement vorgesehen sein.

Der Sensor ist bevorzugt als Laserscanner ausgebildet und weist eine bewegliche Ablenkeinheit auf, mit deren Hilfe die ausgesandten Lichtstrahlen periodisch durch den Überwachungsbereich geführt werden. Wie einleitend erläutert, tastet der Laserscanner mit der Bewegung der beweglichen Ablenkeinheit den Überwachungsbereich in mehreren Ebenen ab. Die Ablenkeinheit ist vorzugsweise in Form einer drehbaren Abtasteinheit ausgebildet, die praktisch einen beweglichen Messkopf bildet, in dem der Lichtsender und/oder der Lichtempfänger jeweils samt Optik und zumindest Teile der Auswertungseinheit untergebracht sind.

Die Auswertungseinheit ist bevorzugt dafür ausgebildet, aus einer Lichtlaufzeit zwischen Aussenden der Lichtstrahlen und Empfangen der remittierten Lichtstrahlen einen Abstand des Objekts zu bestimmen. Der Sensor wird dadurch entfernungsmessend. Alternativ wird lediglich die Anwesenheit eines Objekts festgestellt und beispielsweise als Schaltsignal ausgegeben.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines als Laserscanner ausgebildeten optoelektronischen Sensors;
- Fig. 2: eine beispielhafte Illustration mehrerer Abtaststrahlen, wie sie ein Sensor gemäß Figur 1 verwendet;
- Fig. 3: eine schematische Darstellung des empfängerseitigen Strahlengangs an Lichtempfangselementen mit gegenseitigem Versatz;
- Fig. 4: eine Ausführungsform eines Lichtempfängers mit gegenseitigem Versatz der Lichtempfangselemente durch Höhenstrukturierung einer Leiterplatte;
- Fig. 5: eine weitere Ausführungsform eines Lichtempfängers mit gegenseitigem Versatz der Lichtempfangselemente durch ein Trägerelement mit Höhenstrukturierung;
- Fig. 6: eine weitere Ausführungsform eines Lichtempfängers mit gegenseitigem Versatz der Lichtempfangselemente durch einzelne Trägerelemente;
- Fig. 7: ein nicht beanspruchtes Beispiel eines Lichtempfängers mit gegenseitigem Versatz der Lichtempfangselemente durch Vorordnen von Blendenelementen mit Höhenversatz; und
- Fig. 8: ein weiteres nicht beanspruchtes Beispiel eines Lichtempfängers mit gegenseitigem Versatz der Lichtempfangselemente durch ein vorgeordnetes optisches Element mit Höhenstrukturierung.

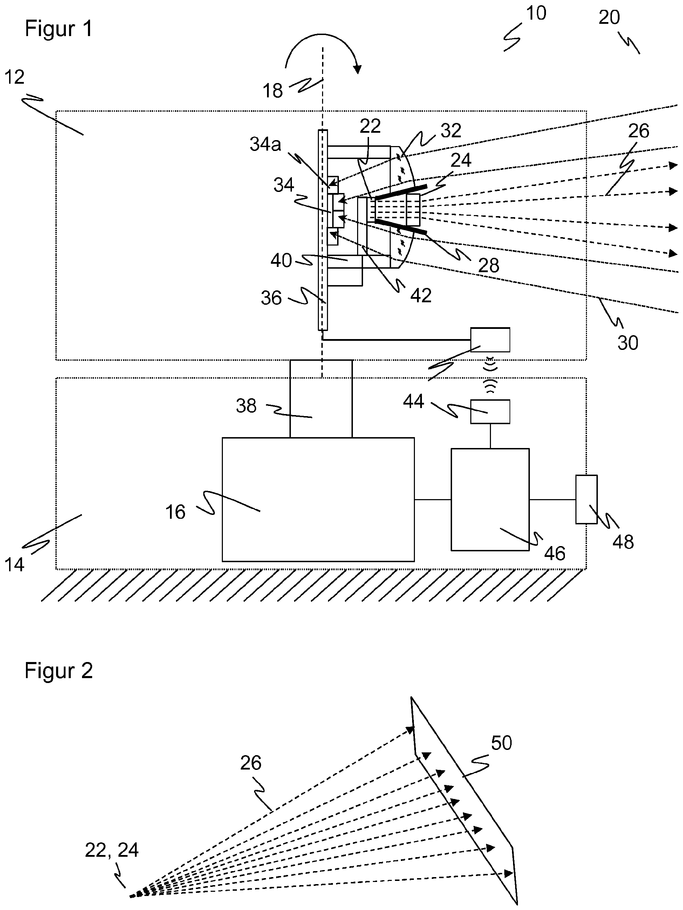

Fig. 1 zeigt eine schematische Schnittdarstellung durch einen optoelektronischen Sensor 10 in einer Ausführungsform als Laserscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

In der Abtasteinheit 12 erzeugen eine Lichtsendereinheit 22, beispielsweise mit LEDs oder Laser in Form von Kantenemittern oder VCSELs, mit Hilfe einer nur als Funktionsblock dargestellten Sendeoptik 24 mehrere Sendelichtstrahlen 26 mit gegenseitigem Winkelversatz, die in den Überwachungsbereich 20 ausgesandt werden. Zur Vermeidung von Streulicht innerhalb des Sensors 10 kann der interne Lichtweg der Sendelichtstrahlen 26 von einem lichtundurchlässigen Tubus 28 abgeschirmt werden.

Treffen die Sendelichtstrahlen 26 in dem Überwachungsbereich 20 auf ein Objekt, so kehren entsprechende remittierte Lichtstrahlen 30 zu dem Sensor 10 zurück. Die remittierten Lichtstrahlen 30 werden von einer Empfangsoptik 32 auf einen Lichtempfänger 34 geführt. Der Lichtempfänger 34 weist mehrere Lichtempfangselemente 34a auf und ist deshalb in der Lage, aus jedem der remittierten Lichtstrahlen 30 ein eigenes elektrisches Empfangssignal zu erzeugen. Dafür sind mehrere Photodioden oder APDs (Avalanche Diode) denkbar, aber auch ein Bildsensor mit entsprechend zugeordneten Einzelpixeln oder Pixelgruppen. Eine weitere denkbare Ausführungsform sieht einen SPAD-Empfänger (Single-Photon Avalanche Diode) mit einer Vielzahl von SPADs vor. Sie haben eine relative große Empfangsfläche und sind daher gut angepasst an eine im Vergleich zu Einzelstrahlsensoren eventuell erhöhte Strahldivergenz.

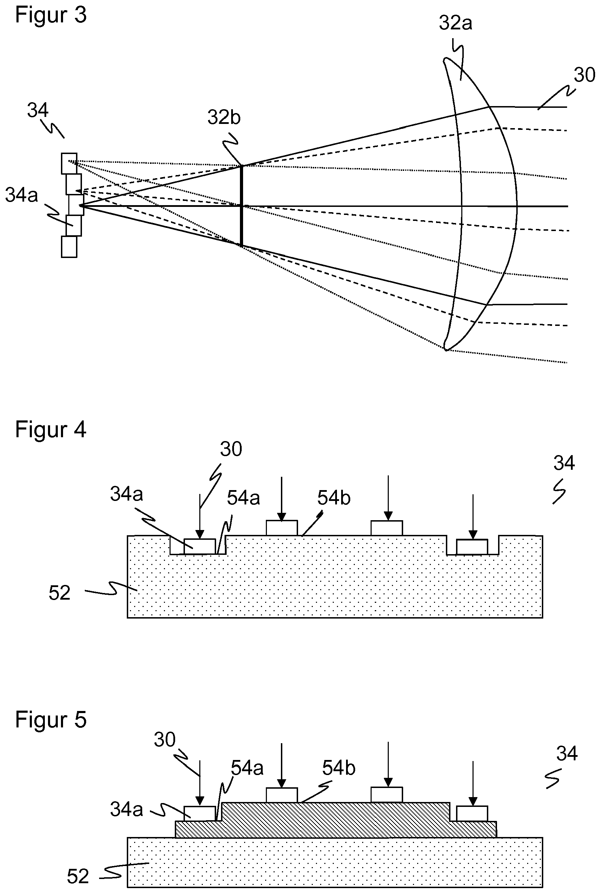

Eine Besonderheit des Lichtempfängers 34 ist, dass die Lichtempfangselemente 34a in einer auch als Höhenrichtung bezeichneten Richtung senkrecht zu ihrer Empfangsfläche, d.h. in der Darstellung der Figur 1 in einer horizontalen Richtung, einen gegenseitigen Versatz aufweisen. Dieser Versatz kann physisch sein wie dargestellt, aber auch durch optische Mittel erreicht werden. Mehrere beispielhafte Ausführungsvarianten dafür werden weiter unten mit Bezug auf die Figuren 4 bis 8 vorgestellt.

Der Lichtempfänger 34 ist in dieser Ausführungsform auf einer Leiterplatte 36 angeordnet, die auf der Drehachse 18 liegt und mit der Welle 38 des Antriebs 16 verbunden ist. Die Empfangsoptik 32 stützt sich durch Beinchen 40 auf der Leiterplatte 36 ab und hält eine weitere Leiterplatte 42 der Lichtsendereinheit 22. Die beiden Leiterplatten 36, 42 sind untereinander verbunden und können auch als gemeinsame Flexprint-Leiterplatte ausgebildet sein.

Der in Figur 1 gezeigte optische Aufbau mit zwei übereinander geschichteten Leiterplatten 36, 42 oder Leiterplattenbereichen und einer zentral innerhalb der Empfangsoptik 32 angeordneten Sendeoptik 24 ist rein beispielhaft zu verstehen. So wäre alternativ jede andere an sich beispielsweise von eindimensionalen optoelektronischen Sensoren oder Laserscannern bekannte Anordnung wie etwa eine Doppelaugenanordnung oder die Verwendung eines Umlenk- oder Strahlteilerspiegels möglich. Weiterhin ist denkbar, Lichtsendereinheit 22 und Lichtempfänger 34 auf einer gemeinsamen Leiterplatte zu montieren, bei gegenüber Figur 1 veränderter Anordnung auch auf einer gemeinsamen Leiterplatte, die in nur einer Ebene liegt.

Eine berührungslose Versorgungs- und Datenschnittstelle 44 verbindet die bewegliche Abtasteinheit 12 mit der ruhenden Sockeleinheit 14. Dort befindet sich eine Steuer- und Auswertungseinheit 46, die zumindest teilweise auch auf der Leiterplatte 36 oder an anderem Ort in der Abtasteinheit 12 untergebracht sein kann. Die Steuer- und Auswertungseinheit 46 steuert die Lichtsendereinheit 22 und erhält das Empfangssignal des Lichtempfängers 34 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 30 und dessen Erfassungsort auf dem Lichtempfänger 34 ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 48 ausgegeben werden. Die Sensorschnittstelle 48 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 48 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 12. Alternativ ist auch eine periodische Ablenkung mittels Drehspiegel denkbar. Bei mehreren Sendelichtstrahlen 26 hat das aber den Nachteil, dass es von der jeweiligen Drehstellung abhängt, wie die mehreren Sendelichtstrahlen 26 in den Überwachungsbereich 20 fallen, denn deren Anordnung rotiert durch den Drehspiegel, wie bekannte geometrische Überlegungen ergeben. Eine weitere alternative Ausführungsform schwenkt die Abtasteinheit 12 hin und her, entweder anstelle der Drehbewegung oder zusätzlich um eine zweite Achse senkrecht zur Drehbewegung, um auch in Elevation eine Abtastbewegung zu erzeugen.

Auch die Ausführung als Laserscanner ist beispielhaft. Es ist auch ein eindimensionaler Taster ohne periodische Bewegung möglich, der dann praktisch nur aus der ruhenden Abtasteinheit 12 mit entsprechender Elektronik, jedoch ohne Sockeleinheit 14 besteht.

Während der Rotation des Sensors 10 wird durch jeden der Sendelichtstrahlen 26 jeweils eine Fläche abgetastet. Nur bei einem Ablenkwinkel von 0°, also einem in Figur 1 nicht vorhandenen horizontalen Sendelichtstrahl, wird dabei eine Ebene des Überwachungsbereichs 20 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 26, die in unterschiedlichen Winkeln nach oben und unten abgelenkt werden, entsteht insgesamt als Abtastgebilde eine Art Schachtelung von mehreren Sanduhren. Auch diese Flächen werden hier manchmal vereinfachend als Abtastebenen bezeichnet.

Figur 2 illustriert noch einmal die mehreren Sendelichtstrahlen 26, die einen ebenen Fächer bilden und untereinander einen jeweils gleichen Winkelabstand aufweisen. In einer senkrechten Schnittebene 50 bilden die Querschnitte der Sendelichtstrahlen 26 dann eine gleichmäßige Linienanordnung von Messpunkten. Dabei ist ein regelmäßig durchsetzter Fächer wie in Figur 2 dargestellt ein in der Praxis besonders wichtiges Beispiel, die Erfindung aber auf diese Anordnung der Sendelichtstrahlen 26 nicht beschränkt.

Um die mehreren remittierten Lichtstrahlen 30 aus unterschiedlichen Winkelrichtungen zu erfassen, muss die Empfangsoptik 32 einen relativ großen Bildbereich abdecken. Es entsteht daher ein Spannungsfeld zwischen dem Wunsch nach einer möglichst einfachen Empfangsoptik 32 und einer ausreichenden Abbildungsqualität. Nach Möglichkeit soll nur eine einzige Linse als Empfangsoptik 32 eingesetzt werden. Ein bevorzugter Ausgangspunkt ist dabei die einleitend bereits erwähnte "landscape lens", also eine Meniskuslinse mit beabstandeter Blende. Eine derartige Linse eröffnet folgende Design-Freiheitsgrade: die Brennweite f, die Öffnungszahl F#, die Lage der Blende, wobei sie üblicherweise in die natürliche Blendenposition mit minimalem Koma gelegt wird, das Material, die Mittendicke und die Krümmungsradien. Natürlich kann auch beispielsweise eine andere Linse ohne Blende oder ein Objektiv aus mehreren Linsen als Ausgangspunkt herangezogen werden, mit entsprechender Veränderung der Design-Freiheitsgrade und des Aufwands.

Erfindungsgemäß ist nun vorgesehen, die Bildebene, also die Ebene mit den Lichtempfangselementen 34a, effektiv zu krümmen. Dadurch entsteht ein weiterer Design-Freiheitsgrad, der dafür genutzt wird, eine verbesserte Abbildungsleistung zu erhalten. Die Krümmung der Bildebene kann durch verschiedene Maßnahmen erreicht werden, die entweder die physische Lage der Lichtempfangselemente 34a oder deren effektive Lage durch vorgeordnete optische Elemente verändert oder beides miteinander kombiniert.

Figur 3 zeigt beispielhaft den empfängerseitigen Verlauf der remittierten Lichtstrahlen 30 an einer Empfangsoptik 32, die als meniskusförmige Linse 32a mit dazu in einigem Abstand angeordneter Blende 32b aufgebaut ist. Die Lichtempfangselemente 34a bilden in diesem Beispiel einen konvexen Bogen, soweit dies mit den diskreten Lichtempfangselementen 34a endlicher Größe möglich ist. Der jeweilige Versatz der Lichtempfangselemente 34a ist der mehrfach angesprochene zusätzliche Design-Freiheitsgrad und deshalb rein beispielhaft. In der Praxis wird der konkrete Versatz gemeinsam mit den Eigenschaften der Empfangsoptik 32 optimiert. Das Beispiel der Figur 3 illustriert, dass die Lichtstrahlen 30 als Folge der Abbildungsfehler einer nicht perfekt optimierbaren einfachen Empfangsoptik 32 nicht auf eine gemeinsame Ebene fokussiert sind. Dieser nachteilige Effekt wird durch geeigneten Versatz der Lichtempfangselemente 34a zumindest teilweise kompensiert, so dass die einzelnen remittierten Lichtstrahlen 30 scharf oder zumindest schärfer abgebildet werden. Als ein Zahlenbeispiel, das ungefähr der Darstellung in Figur 3 entspricht, erzeugt die Empfangsoptik 32 mit einer Blendenzahl k=2, einem Bildfeld von ±6° oder alternativ ±9° und einer Brennweite f=80 noch Bildpunkte, die einen geometrischen Durchmesser <100 µm haben.

Anhand der Figuren 4 bis 8 werden nun verschiedene technische Umsetzungen vorgestellt, mit denen die effektiv gekrümmte Bildebene durch physischen oder optischen Versatz der Lichtempfangselemente 34a erreicht werden kann. In der Praxis wird wohl meist nur eine dieser Varianten ausgewählt, aber dies schließt nicht aus, Kombinationen zu bilden, wobei sich dann der Versatz entsprechend überlagert.

Figur 4 zeigt eine Ausführungsform des Lichtempfängers 34, in der die Lichtempfangselemente 34a auf einer höhenstrukturierten Leiterplatte 52 angeordnet sind. Die hier und im Folgenden erwähnte Leiterplatte 52 des Lichtempfängers 34 kann grundsätzlich die bereits in Figur 1 erwähnte Leiterplatte 36 sein, trägt aber in den Darstellungen ein eigenes Bezugszeichen einer separaten Leiterplatte 52, die mit der Leiterplatte 36 verbunden oder darauf angeordnet ist.

Aufgrund der Höhenstrukturierung der Leiterplatte 52 entstehen Bereiche 54a-b mit gegenseitigem Höhenversatz, wo die Lichtempfangselemente 34a angeordnet sind und sich deshalb nicht mehr in einer Ebene befinden, sondern entsprechend gegeneinander versetzt werden. Die Leiterplatte 52 kann in diesen Bereichen 54a-b eine unterschiedliche Dicke aufweisen.

Figur 5 zeigt eine weitere Ausführungsform des Lichtempfängers 34. Hier kann die Leiterplatte 52 selbst flach ausgebildet bleiben. Der Versatz wird durch ein auf der Leiterplatte 52 angeordnetes Trägerelement 56 mit Höhenstruktur erreicht. Die Bereiche 54a-b mit gegenseitigem Höhenversatz sind also nicht auf der Leiterplatte 52 selbst, sondern auf dem Trägerelement 56 vorgesehen. Der Vorteil dieser Anordnung ist, dass die Leiterplatte 52 nicht strukturiert oder verformt werden muss. Es kann die Herstellung erleichtern, stattdessen das Trägerelement 56 separat zu strukturieren und dann auf der Leiterplatte 52 zu bestücken.

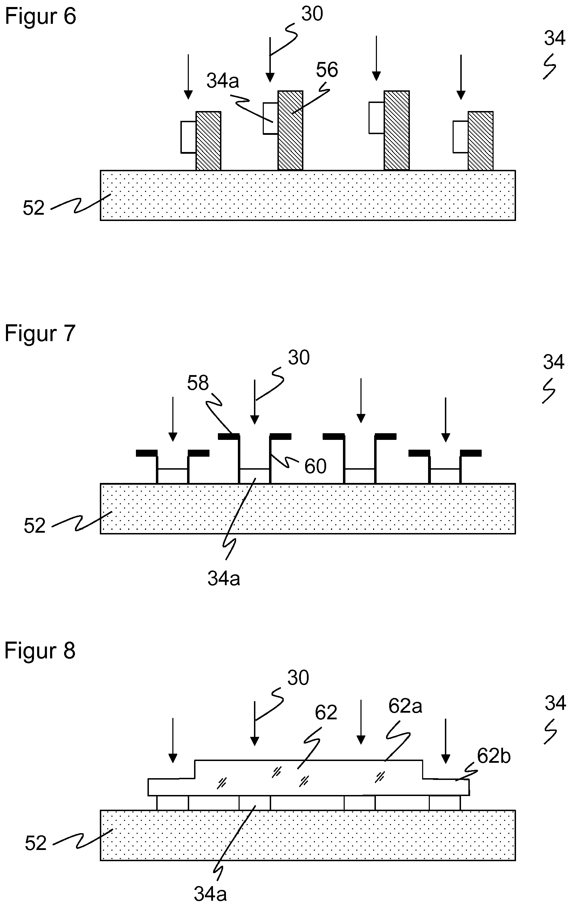

Figur 6 zeigt eine weitere Ausführungsform des Lichtempfängers 34 mit einer an sich flach ausgebildeten Leiterplatte 52. Darauf sind mehrere kleine Leiterplatten 56 unterschiedlicher Dicke oder Höhe angeordnet, die wiederum jeweils ein Lichtempfangselement 34a oder abweichend von der Darstellung eine Gruppe von Lichtempfangselementen 34a in unterschiedlicher Höhe tragen. Als Variante ist denkbar, die kleinen Leiterplatten 56 unterschiedlich tief in die Leiterplatte 52 eindringen zu lassen oder das jeweilige Lichtempfangselement 34a in unterschiedlicher Höhe auf der kleinen Leiterplatte 56 anzuordnen. Das erlaubt dann insbesondere auch kleine Leiterplatten 56 mit untereinander identischer Geometrie oder sonstiger Ausgestaltung.

Während die Ausführungsformen nach den Figuren 4 bis 6 zu einem physischen Höhenversatz der Lichtempfangselemente 34a führen, sollen nun unter Bezugnahme auf die Figuren 7 und 8 noch zwei nicht beanspruchte Beipiele mit effektivem oder optischem Höhenversatz vorgestellt werden.

Figur 7 zeigt ein Beispiel des Lichtempfängers 34, bei dem nun physisch die Lichtempfangselemente 34a auf einer Ebene auf der Leiterplatte 52 angeordnet sind. Die gekrümmte Bildebene wird durch eine Vielzahl von zusätzlichen Blendenelementen 58 erreicht, die jeweils einen unterschiedlichen Höhenabstand zu dem zugeordneten Lichtempfangselement 34a aufweisen. Die Anordnung der Blendenelemente 58 insgesamt bildet wegen der individuellen Höhenabstände eine gekrümmte Fläche.

Damit das Licht der remittierten Lichtstrahlen 30 ohne Lichtverluste oder optisches Übersprechen von dem Blendenelement 58 zu dem Lichtempfangselement 34a geführt wird, können zusätzlich Lichtleitungselemente 60 zwischen Blendenelement 58 und Lichtempfangselement 34a vorgesehen sein. Dabei kann es sich beispielsweise um ein innen verspiegeltes Röhrchen handeln, das an beiden Enden optisch dicht aufsitzt.

Figur 8 zeigt ein weiteres Beipiel des Lichtempfängers 34 mit Lichtempfangselementen 34a, die in einer Ebene auf der Leiterplatte 52 angeordnet sind. Für den Höhenversatz sorgt hier ein optisches Element 62, das den Lichtempfangselementen 34a vorgeordnet ist und die effektive Länge des Lichtwegs individuell verändert. Im dargestellten Beispiel ist das optische Element 62 ein transparentes, stufenförmig geformtes Bauteil, das also in unterschiedlichen Bereichen 62a-b für die jeweiligen Lichtempfangselemente 34a eine unterschiedliche effektive Dicke aufweist.

Wenn bei den Erläuterungen zu den Figuren 4 bis 8 von individuellem Versatz die Rede ist, so soll dies nicht ausschließen, dass der Versatz für mehrere Lichtempfangselemente 34a gleich ist, wie dies auch den Darstellungen entspricht. Der Versatz ist ein Design-Freiheitsgrad und nicht von vorne herein beschränkt, auch nicht durch die Forderung nach Unterschieden.

Die Empfangsflächen der Lichtempfangselemente 34a sind in den Darstellungen jeweils parallel zueinander ausgerichtet. Das könnte in weiteren Ausführungsformen variiert werden, beispielsweise um sie durch Verkippen zumindest annähernd senkrecht zu der erwarteten Einfallsrichtung des jeweils zugehörigen remittierten Lichtstrahls 30 zu stellen. Denkbar ist weiterhin ein zusätzlicher lateraler Versatz der Lichtempfangselemente 34a, die dann keine regelmäßige Anordnung mehr bilden würden. Derartige Anpassungen können die Abbildungsqualität der Empfangsoptik 32 weiter verbessern.

Die Erfindung beschreibt eine Empfangsoptik 32, für die mittels Höhenversatz der Lichtempfangselemente 34a ein zusätzlicher Design-Freiheitsgrad geschaffen wird. Nach demselben Grundgedanken kann auch für die Sendeoptik 24, insbesondere wenn sie als den Lichtsendern der Lichtsendereinheit 22 vorgeordnete gemeinsame einfache Linse beziehungsweise Linse mit Blende ausgestaltet ist, durch Höhenversatz der einzelnen Lichtsender ein zusätzlicher Design-Freiheitsgrad entstehen. Konkrete Ausgestaltungen analog den Figuren 4 bis 8 sind dabei denkbar, in denen jeweils die Lichtempfangselemente 34a durch einzelne Lichtsender ersetzt sind, und wobei zu beachten ist, dass einzelne Ausführungsformen wie beispielsweise diejenige nach Figur 7 mit Blendenelementen 58 sendeseitig weniger geeignet sind als empfangsseitig.

## Patentansprüche

1. Optoelektronischer Sensor (10) zur Erfassung eines Objekts in einem Überwachungsbereich (20) mit mindestens einem Lichtsender (22) zum Aussenden mehrerer voneinander separierter Lichtstrahlen (26), einem Lichtempfänger (34) mit mehreren Lichtempfangselementen (34a) zum Erzeugen je eines Empfangssignals aus den an dem Objekt remittierten Lichtstrahlen (30), einer dem Lichtempfänger (34) vorgeordneten Empfangsoptik (32) und einer Auswertungseinheit (46) zur Gewinnung von Informationen über das Objekt aus den Empfangssignalen, wobei zumindest einige der Lichtempfangselemente (34a) in einer Richtung senkrecht zu ihrer Empfangsfläche einen gegenseitigen Versatz aufweisen,
**dadurch gekennzeichnet,**
**dass** der gegenseitige Versatz durch mindestens eine der folgenden Maßnahmen erreicht ist:
mehrere Lichtempfangselemente (34a) sind auf einer gemeinsamen Leiterplatte (36, 52) angeordnet, die aufgrund einer Höhenstrukturierung der Leiterplatte selbst mit Leiterplattenbereichen unterschiedlicher Dicke Bereiche (54a-b) unterschiedlicher Höhen aufweist oder auf der ein Trägerelement (56) mit Bereichen unterschiedlicher Höhen bestückt ist, wobei die Lichtempfangselemente (34a) in den Bereichen (54a-b) angeordnet sind.

2. Sensor (10) nach Anspruch 1,
wobei die Lichtempfangselemente (34a) mit ihrem gegenseitigen Versatz einen Bogen bilden.

3. Sensor (10) nach Anspruch 1 oder 2,
wobei die Empfangsoptik (32) eine Linse (32a) aufweist.

4. Sensor (10) nach Anspruch 3,
wobei der Linse (32a) eine Blende (32b) und/oder mindestens eine weitere Linse zugeordnet ist.

5. Sensor (10) nach einem der vorhergehenden Ansprüche,
der als Laserscanner ausgebildet ist und eine bewegliche Ablenkeinheit (12) aufweist, mit deren Hilfe die ausgesandten Lichtstrahlen (26) periodisch durch den Überwachungsbereich (20) geführt werden, wobei insbesondere die Ablenkeinheit (12) in Form eine drehbaren Abtasteinheit (12) ausgebildet ist, in welcher der Lichtsender (22) und/oder der Lichtempfänger (34) untergebracht ist.

6. Sensor (10) nach einem der vorhergehenden Ansprüche,
wobei die Auswertungseinheit (46) dafür ausgebildet ist, aus einer Lichtlaufzeit zwischen Aussenden der Lichtstrahlen und Empfangen der remittierten Lichtstrahlen einen Abstand des Objekts zu bestimmen.

7. Verfahren zur Erfassung eines Objekts in einem Überwachungsbereich (20), bei dem mehrere voneinander separierte Lichtstrahlen (26) in den Überwachungsbereich (20) ausgesandt und die von dem Objekt remittierte Lichtstrahlen (30) zum Erzeugen je eines Empfangssignals jeweils mit einem Lichtempfangselement (34a) empfangen werden, um aus den Empfangssignalen Informationen über das Objekt zu gewinnen, wobei zumindest einige der Lichtempfangselemente (34a) in einer Richtung senkrecht zu ihrer Empfangsfläche einen gegenseitigen Versatz aufweisen,
**dadurch gekennzeichnet,**
**dass** der gegenseitige Versatz durch mindestens eine der folgenden Maßnahmen erreicht wird:
mehrere Lichtempfangselemente (34a) sind auf einer gemeinsamen Leiterplatte (36, 52) angeordnet, die aufgrund einer Höhenstrukturierung der Leiterplatte selbst mit Leiterplattenbereichen unterschiedlicher Dicke Bereiche (54a-b) unterschiedlicher Höhen aufweist oder auf der ein Trägerelement (56) mit Bereichen unterschiedlicher Höhen bestückt ist, wobei die Lichtempfangselemente (34a) in den Bereichen (54a-b) angeordnet sind.

## Claims

1. An optoelectronic sensor (10) for detecting an object in a monitoring area (20), the sensor (10) having at least one light transmitter (22) for transmitting a plurality of mutually separated light beams (26), a light receiver (34) with a plurality of light receiving elements (34a) for generating a respective reception signal from the remitted light beams (30) remitted by the objects, receiving optics (32) arranged in front of the light receiver (34), and an evaluation unit (46) for obtaining information about the object from the reception signals, wherein at least some of the light receiving elements (34a) have a mutual offset in a direction perpendicular to their receiving surface,
**characterized in that** the mutual offset is achieved by at least one of the following measures:
several light receiving elements (34a) are arranged on a common circuit board (36, 52) which due to a height structuring of the circuit board itself with circuit board regions of varying thickness comprises areas (54a-b) of different heights or which is equipped with a carrier element (56) with areas (54a-b) of different heights, wherein the light receiving elements (34a) are arranged in the areas (54a-b).

2. The sensor according to claim 1,
wherein the light receiving elements (34a) form an arc with their mutual offset.

3. The sensor according to claim 1 or 2,
wherein the receiving optics (32) comprises a lens (32a).

4. The sensor according to claim 3,
wherein at least one of an aperture (32b) and an additional lens is associated with the lens (32a).

5. The sensor according to any of the preceding claims,
which is configured as a laser scanner and has a movable deflection unit (12) for periodically guiding the transmitted light beams (26) through the monitoring area (20), wherein in particular the deflection unit (12) is configured as a rotatable scanning unit with the light transmitter (22) and/or the light receiver (34) being arranged therein.

6. The sensor according to any of the preceding claims,
wherein the evaluation unit (46) is configured to determine a distance of the object from a light time of flight between transmitting the light beams and receiving the remitted light beams.

7. A method for detecting an object in a monitoring area (20), wherein a plurality of mutually separated light beams (26) are transmitted into the monitoring area (20) and the remitted light beams (30) remitted by the object are each received by a respective light receiving element (34a) for generating a respective reception signal in order to obtain information about the object from the reception signals, wherein at least some of the light receiving elements (34a) have a mutual offset in a direction perpendicular to their receiving surface,
**characterized in that** the mutual offset is achieved by at least one of the following measures:
several light receiving elements (34a) are arranged on a common circuit board (36, 52) which due to a height structuring of the circuit board itself with circuit board regions of varying thickness comprises areas (54a-b) of different heights or which is equipped with a carrier element (56) with areas of different heights, wherein the light receiving elements (34a) are arranged in the areas (54a-b).

## Revendications

1. Capteur optoélectronique (10) pour détecter un objet dans une zone à surveiller (20), comportant au moins un émetteur de lumière (22) pour émettre plusieurs rayons lumineux (26) séparés les uns des autres, un récepteur de lumière (34) ayant plusieurs éléments de réception de lumière (34a) pour générer un signal de réception respectif à partir des rayons lumineux (30) réémis sur l'objet, une optique de réception (32) agencée en amont du récepteur de lumière (34), et une unité d'évaluation (46) pour obtenir des informations relatives à l'objet à partir des signaux de réception, quelques-uns au moins des éléments de réception de lumière (34a) présentant un décalage mutuel dans une direction perpendiculaire à leur surface de réception,
**caractérisé en ce que**
le décalage mutuel est atteint par l'une au moins des mesures suivantes :
plusieurs éléments de réception de lumière (34a) sont agencés sur une carte à circuits imprimés (36, 52) commune qui présente des zones (54a - b) de différentes hauteurs en raison d'une structuration en hauteur de la carte à circuits imprimés elle-même avec des zones de carte ayant différentes épaisseurs, ou sur laquelle est prévu un élément porteur (56) ayant des zones de différentes hauteurs, les éléments de réception de lumière (34a) étant agencés dans lesdites zones (54a - b).

2. Capteur (10) selon la revendication 1,
dans lequel les éléments de réception de lumière (34a) forment un arc par leur décalage mutuel.

3. Capteur (10) selon la revendication 1 ou 2,
dans lequel l'optique de réception (32) présente une lentille (32a).

4. Capteur (10) selon la revendication 3,
dans lequel un diaphragme (32b) et/ou au moins une autre lentille est associé(e) à la lentille (32a).

5. Capteur (10) selon l'une des revendications précédentes,
réalisé sous forme de scanneur laser et comprenant une unité de déviation mobile (12) à l'aide de laquelle les rayons lumineux émis (26) sont menés périodiquement à travers la zone à surveiller (20), l'unité de déviation (12) étant réalisée en particulier sous la forme d'une unité de balayage rotative (12) dans laquelle est logé l'émetteur de lumière (22) et/ou le récepteur de lumière (34).

6. Capteur (10) selon l'une des revendications précédentes,
dans lequel l'unité d'évaluation (46) est réalisée pour déterminer une distance de l'objet à partir d'un temps de parcours de lumière entre l'émission des rayons lumineux et la réception des rayons lumineux réémis.

7. Procédé pour détecter un objet dans une zone à surveiller (20), dans lequel plusieurs rayons lumineux (26) séparés les uns des autres sont émis dans la zone à surveiller (20), et les rayons lumineux (30) réémis par l'objet sont reçus par un élément de réception de lumière (34a) respectif pour générer un signal de réception respectif, afin d'obtenir des informations relatives à l'objet à partir des signaux de réception, quelques-uns au moins des éléments de réception de lumière (34a) présentant un décalage mutuel dans une direction perpendiculaire à leur surface de réception,
**caractérisé en ce que**
le décalage mutuel est atteint par l'une au moins des mesures suivantes :
plusieurs éléments de réception de lumière (34a) sont agencés sur une carte à circuits imprimés (36, 52) commune qui présente des zones (54a - b) de différentes hauteurs en raison d'une structuration en hauteur de la carte à circuits imprimés elle-même avec des zones de carte ayant différentes épaisseurs, ou sur laquelle est prévu un élément porteur (56) ayant des zones de différentes hauteurs, les éléments de réception de lumière (34a) étant agencés dans lesdites zones (54a - b).
